# EUROPEAN PATENT SPECIFICATION

(11) **EP 3 556 738 B1**
(45) Date of publication and mention of the grant of the patent: **22.01.2025**
(21) Application number: 17879786.6
(22) Date of filing: 07.12.2017
(51) Int. Cl.: C04B 7/47, F27D 15/02

(54) **COOLER APPARATUS**
KÜHLVORRICHTUNG
APPAREIL DE REFROIDISSEMENT

(30) Priority: 13.12.2016 JP 2016241209
(43) Date of publication of application: 23.10.2019
(73) Proprietor: Kawasaki Jukogyo Kabushiki Kaisha, Kobe-shi, Hyogo 650-8670 (JP)
(72) Inventor: OCHI, Shigeki, Chuo-ku, Kobe-shi, Hyogo 650-8670 (JP); YAMAGATA, Yasushi, Chuo-ku, Kobe-shi, Hyogo 650-8670 (JP); OSAWA, Hiroaki, Chuo-ku, Kobe-shi, Hyogo 650-8670 (JP); DEI, Koichi, Chuo-ku, Kobe-shi, Hyogo 650-8670 (JP); YOSHINAGA, Akihiro, Chuo-ku, Kobe-shi, Hyogo 650-8670 (JP); YAMAGUCHI, Yoshihisa, Chuo-ku, Kobe-shi, Hyogo 650-8670 (JP); YAMASHITA, Mariko, Chuo-ku, Kobe-shi, Hyogo 650-8670 (JP); AOMATSU, Shinnosuke, Chuo-ku, Kobe-shi, Hyogo 650-8670 (JP)
(74) Representative: Leinweber & Zimmermann
(86) International application number: PCT/JP2017/043993
(87) International publication number: WO 2018/110420

(56) References cited:
- JP-A- 2003 530 537
- JP-A- 2013 133 247
- JP-A- 2016 536 241
- JP-A- H06 206 746
- No further relevant documents disclosed

## Description

### Technical Field

The present invention relates to a cooler apparatus for cooling down a high-temperature granular conveyed material, such as granular cement clinker, while conveying the granular conveyed material, according to the preamble of claim 1, as disclosed in WO 2012/084608.

### Background Art

A cement plant is equipped with a cooler apparatus that conveys high-temperature cement clinker produced through preheating, calcination, and firing while cooling down the cement clinker. One example of such a cooler apparatus is a cooler disclosed by Patent Literature 1. The cooler of Patent Literature 1 is a walking floor type cooler apparatus, in which a plurality of cooling grates are arranged adjacently to each other. The plurality of cooling grates are movable forward and rearward independently of each other. By controlling the forward movement and rearward movement of each cooling grate, high-temperature cement clinker on the plurality of cooling grates is conveyed.

The cooler of Patent Literature 1 conveys the cement clinker, for example, by the following method. Specifically, all the plurality of cooling grates are moved forward to convey the cement clinker supported on the plurality of cooling grates. Thereafter, the plurality of cooling grates are moved rearward one by one independently to bring all the cooling grates back to their original positions. After the cooling grates are brought back to their original positions, all the plurality of cooling grates are moved forward again. By repeating this, the cement clinker is conveyed intermittently.

### Citation List

### Patent Literature

PTL 1: Japanese National Phase PCT Laid-Open Application Publication No. 2007-515365

### Summary of Invention

### Technical Problem

As described above, in the case of a walking floor type cooler apparatus, such as the cooler of Patent Literature 1, it is necessary to move the cooling grates in a reciprocating manner when conveying the cement clinker. When the cooling grates move in a reciprocating manner, basically the cement clinker moves together with the cooling grates since the cement clinker receives frictional resistance from the cooling grates. Accordingly, when the cooling grates are moved rearward, the cement clinker on the cooling grates is also brought back rearward together with the cooling grates. The greater the amount of cement clinker brought back rearward together with the cooling grates, the lower the conveyance efficiency of the cooler.

In view of the above, an object of the present invention is to provide a cooler apparatus that makes it possible to improve the efficiency in conveying the granular conveyed material.

### Solution to Problem

A cooler apparatus of the present invention is a cooler apparatus for cooling, by using cooling air, a high-temperature granular conveyed material that is deposited to form a layer while conveying the granular conveyed material in a conveying direction. The cooler apparatus includes: a plurality of cooling grate lines that are arranged adjacently to each other in a width direction orthogonal to the conveying direction, the plurality of cooling grate lines being configured to support the granular conveyed material via a dead layer formed by a granular buried material having a lower temperature than a temperature of the granular conveyed material, and to move in a reciprocating manner in the conveying direction and a reverse direction thereto to convey the granular conveyed material; and a damming member disposed above at least one of the plurality of cooling grate lines and buried in the layer of the granular conveyed material, the damming member being configured to move in the conveying direction and the reverse direction relative to the at least one cooling grate line when the at least one cooling grate line moves in the reciprocating manner, and to dam up the granular conveyed material when the at least one cooling grate line moves in the reverse direction relative to the damming member. The damming member is configured such that the granular conveyed material moves onto and beyond the damming member more easily when the at least one cooling grate line moves in the conveying direction relative to the damming member than when the at least one cooling grate line moves in the reverse direction relative to the damming member.

According to the present invention, when the at least one cooling grate line moves in the reverse direction relative to the damming member, the high-temperature granular conveyed material that is brought back in the reverse direction can be dammed up by the damming member. However, due to the installation of the damming member, when the at least one cooling grate line moves in the conveying direction relative to the damming member, the granular conveyed material is pushed back in the reverse direction by the damming member. In this respect, the damming member is formed in such a manner that the granular conveyed material moves onto and beyond the damming member more easily when the at least one cooling grate line moves in the conveying direction relative to the damming member than when the at least one cooling grate line moves in the reverse direction relative to the damming member. Accordingly, the amount of granular conveyed material pushed back by the damming member can be reduced compared to a case where the damming member is not formed in such a manner. Thus, the amount of granular conveyed material pushed back by the damming member in the reverse direction from the damming member can be reduced while damming up the granular conveyed material brought back in the reverse direction by the damming member. This makes it possible to improve the conveyance efficiency of the cooler apparatus.

In the above invention, the damming member may include a damming surface facing in the conveying direction, the damming surface being configured to dam up the granular conveyed material, and the damming surface may be inclined upward in the reverse direction.

According to the above configuration, the granular conveyed material can be dammed up while dispersing the load that the damming member receives from the granular conveyed material.

In the above invention, the damming member may include a push-back surface facing in the reverse direction, the push-back surface being formed such that the granular conveyed material moves onto the push-back surface. The push-back surface may be inclined upward in the conveying direction. An angle of the push-back surface may be less than an angle of the damming surface.

According to the above configuration, the amount of granular conveyed material pushed back by the push-back surface in the reverse direction from the damming member can be reduced, which makes it possible to improve the conveyance efficiency of the cooler apparatus.

In the above invention, the cooler apparatus may include a coupling member configured to couple the damming member and a different one of the cooling grate lines different from the at least one cooling grate line.

According to the above configuration, the damming member can be moved in the reciprocating manner together with the different cooling grate line. Accordingly, no drive device for moving the damming member is required, which makes it possible to reduce the number of components. Moreover, for example, when the plurality of cooling grate lines are moved together in the conveying direction, the damming member can be moved in the conveying direction together with the plurality of cooling grate lines. That is, the damming member can be moved in the conveying direction together with the granular conveyed material, and this makes it possible to prevent a situation where the operation of conveying the granular conveyed material in the conveying direction is hindered. Thus, lowering of conveyance efficiency when conveying the granular conveyed material in the conveying direction can be suppressed.

In the above invention, the different cooling grate line may include a plurality of inner partition plates that are arranged and spaced apart from each other in the conveying direction, the plurality of inner partition plates being configured to inhibit movement of the dead layer. The coupling member may be provided on the plurality of inner partition plates via an attachment member.

According to the above configuration, the coupling member is attached to the inner partition plates via the attachment member. Since the coupling member can be thus attached to the inner partition plates, increase in the number of components can be suppressed.

In the above invention, the cooler apparatus may include a controller configured to control movement of the plurality of cooling grate lines to cause the plurality of cooling grate lines to move in the reciprocating manner. The controller may be configured to: cause all the plurality of cooling grate lines to move in the conveying direction; then cause the at least one cooling grate line to move in the reverse direction; and thereafter cause the different cooling grate line to move in the reverse direction.

The above configuration makes it possible to perform conveyance work with high conveyance efficiency.

In the above invention, the damming member may be disposed above and spaced apart from the at least one cooling grate line, such that a gap is formed between the damming member and the at least one cooling grate line.

The above configuration makes it possible to prevent a situation where the at least one cooling grate line becomes unable to move due to the granular conveyed material getting caught between the coupling member and the at least one cooling grate line.

In the above invention, the plurality of cooling grate lines may convey the granular conveyed material to a discharge outlet by moving in the reciprocating manner. The damming member may be disposed at a position that is closer to the discharge outlet than to a center of the cooling grate lines.

According to the above configuration, the amount of granular conveyed material brought back in the reverse direction together with the cooling grate lines can be reduced, and a greater amount of granular conveyed material can be dammed up effectively. This makes it possible to further improve the efficiency in conveying the granular conveyed material.

In the above invention, the different cooling grate line may be positioned at both sides of the at least one cooling grate line in the width direction.

The above configuration makes it possible to prevent the damming member from being disposed near both ends of the cooler apparatus in the width direction. Accordingly, in the active layer, which is a layer formed by the deposited granular conveyed material, a greater amount of granular conveyed material can be deposited on both sides of the active layer in the width direction.

### Advantageous Effects of Invention

The present invention intends to provide a cooler apparatus that makes it possible to improve the efficiency in conveying the granular conveyed material.

The above and other objects, features, and advantages of the present invention will more fully be apparent from the following detailed description of a preferred embodiment with accompanying drawings.

### Brief Description of Drawings

Fig. 1 is a schematic diagram showing a pyroprocessing facility of a cement plant including a cooler apparatus according to the present invention.
Fig. 2 is a perspective view schematically showing the configuration of the cooler apparatus of Fig. 1.
Fig. 3 is a cutaway top plan view of the forward end part of the cooler apparatus of Fig. 1.
Fig. 4 is an enlarged front sectional view of a part of the cooler apparatus of Fig. 3, the view being taken along a cutting plane line IV-IV.
Fig. 5 is an enlarged side sectional view of a part of the cooler apparatus of Fig. 3, the view being taken along a cutting plane line V-V.
Fig. 6 is an enlarged perspective view of a part of the cooler apparatus of Fig. 3 in a state where a damming member and a coupling member are removed from the cooler apparatus.
Figs. 7A and 7B are schematic diagrams showing movements of a plurality of cooling grate lines of the cooler apparatus of Fig. 3 during conveyance.
Figs. 8A and 8B are schematic diagrams showing movements of the plurality of cooling grate lines of the cooler apparatus of Fig. 3 during conveyance.
Fig. 9 is an enlarged plan view showing a state where the damming member and the coupling member are attached to the cooler apparatus of Fig. 6.
Fig. 10 is a perspective view showing the damming member and the vicinity thereof in the cooler apparatus of Fig. 9 as seen from diagonally above.
Fig. 11 is a plan view showing the forward end part of a cooler apparatus of another embodiment.
Fig. 12 is a plan view showing the forward end part of a cooler apparatus of yet another embodiment.

### Description of Embodiments

Hereinafter, a cooler apparatus 1 of an embodiment according to the present invention is described with reference to the drawings. It should be noted that directions mentioned in the description below are used for the sake of convenience of the description, but do not suggest that the orientation and the like of the components of the present invention are limited to such directions. The cooler apparatus 1 described below is merely an embodiment of the present invention, which is limited by the appended set of claims.

### <Cement Plant>

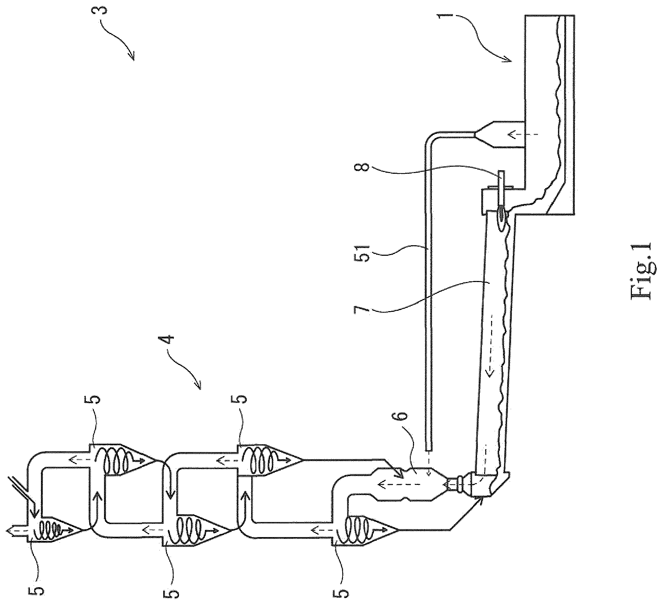

Cement is produced through the following steps: a raw meal grinding step of grinding cement raw meal containing limestone, clay, silica stone, iron, and so forth; a pyroprocessing step of firing the ground cement raw meal; and a finishing step that is the final step. These three steps are performed in a cement plant. In the pyroprocessing step, which is one of these three steps, the ground cement raw meal is fired and cooled down, and thereby granular cement clinker is produced. Fig. 1 shows a pyroprocessing facility 3 of the cement plant, and shows a part where the pyroprocessing step in cement manufacturing is performed. The pyroprocessing facility 3 performs preheating, calcination, and firing of the cement raw meal that has been ground in the raw meal grinding step, and cools down the granular cement clinker that is in a high-temperature state due to the firing.

The part where the pyroprocessing step is performed is hereinafter described in further detail. The pyroprocessing facility 3 includes a preheater 4, and the preheater 4 includes a plurality of cyclones 5. The cyclones 5 are arranged vertically in a staged manner. Each cyclone 5 causes exhaust gas therein to flow upward to the cyclone 5 of the upper stage (see dashed arrows in Fig. 1), separates cement raw meal fed therein by a swirl flow, and feeds the separated cement raw meal into the cyclone 5 of the lower stage (see solid arrows in Fig. 1). The cyclone 5 positioned immediately above the cyclone 5 of the lowermost stage feeds the cement raw meal into a precalciner 6. The precalciner 6 includes a burner. By heat from the burner and heat from exhaust gas described below, the precalciner 6 causes a reaction by which carbon dioxide is separated from the fed cement raw meal (i.e., calcination reaction). The cement raw meal subjected to the calcination reaction in the precalciner 6 is led to the cyclone 5 of the lowermost stage as described below, and the cement raw meal in the lowermost cyclone 5 is supplied to a rotary kiln 7.

The rotary kiln 7 is formed in a horizontally long cylindrical shape, and is several tens of meters long or longer. The rotary kiln 7 is disposed such that it is slightly inclined downward from an inlet positioned at the cyclone 5 side toward an outlet positioned at the forward end side. Therefore, by rotating the rotary kiln 7 about its axis, the cement raw meal present at the inlet side is conveyed toward the outlet side. A combustor 8 is provided at the outlet of the rotary kiln 7. The combustor 8 generates a high-temperature flame, and fires the cement raw meal.

Also, the combustor 8 injects high-temperature combustion gas toward the inlet side, and the combustion gas injected by the combustor 8 flows in the rotary kiln 7 toward the inlet while firing the cement raw meal. The combustion gas that flows as high-temperature exhaust gas forms a jet flow. The jet flow flows upward in the precalciner 6 from the lower end of the precalciner 6 (see dashed arrows in Fig. 1), and causes the cement raw meal fed in the precalciner 6 to flow upward. The cement raw meal is heated to about 900°C by the exhaust gas and the burner, that is, the cement raw meal is calcined. The cement raw meal flowing upward flows together with the exhaust gas into the cyclone 5 of the lowermost stage, in which the exhaust gas and the cement raw meal that have flowed therein are separated from each other. The separated cement raw meal is supplied to the rotary kiln 7, and the separated exhaust gas is caused to flow upward to the cyclone 5 positioned immediately above the cyclone 5 of the lowermost stage. The exhaust gas flowing upward exchanges heat, in each cyclone 5, with the cement raw meal fed therein to heat the cement raw meal. Then, the exhaust gas is separated from the cement raw meal again. The separated exhaust gas flows further upward to the cyclone 5 positioned above to repeat the heat exchange. Then, the exhaust gas is discharged to the atmosphere from the cyclone 5 of the uppermost stage.

In the pyroprocessing facility 3 configured as above, the cement raw meal is fed therein at a position near the cyclone 5 of the uppermost stage; the fed cement raw meal is sufficiently preheated while exchanging heat with the exhaust gas, and moves downward to the cyclone 5 positioned immediately above the cyclone 5 of the lowermost stage; and then the cement raw meal is fed into the precalciner 6. In the precalciner 6, the cement raw meal is calcined by the burner and the high-temperature gas. Thereafter, the cement raw meal is led to the cyclone 5 of the lowermost stage, in which the cement raw meal is separated from the exhaust gas and supplied to the rotary kiln 7. The supplied cement raw meal is conveyed toward the outlet side while being subjected to the firing in the rotary kiln 7. As a result of performing the preheating, calcination, and firing in this manner, the cement clinker is formed. The cooler apparatus 1 is provided at the outlet of the rotary kiln 7, and the formed cement clinker is discharged from the outlet of the rotary kiln 7 to the cooler apparatus 1.

### <Cooler Apparatus>

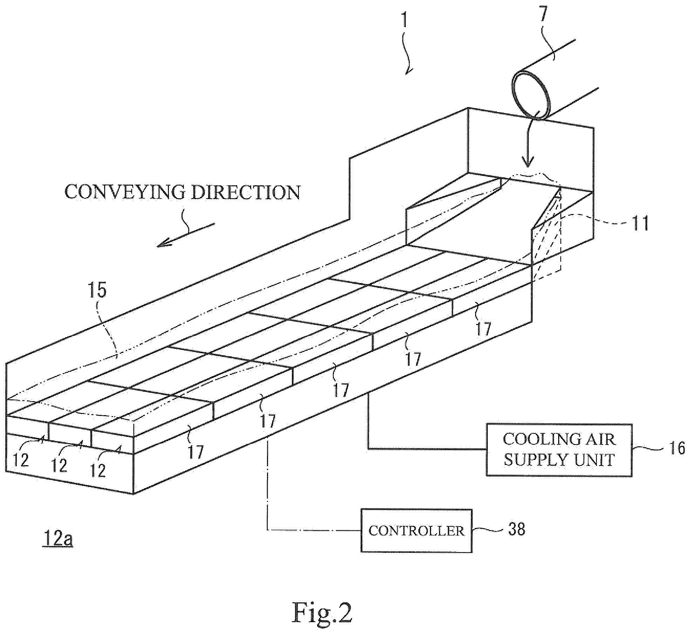

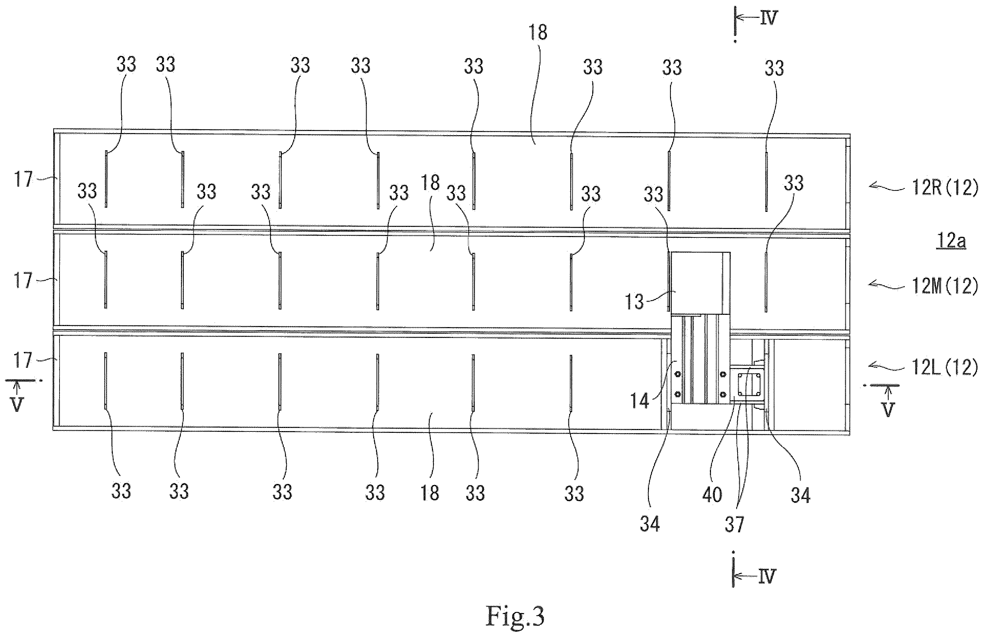

The cooler apparatus 1 is configured to cool down the cement clinker (high-temperature granular conveyed material) discharged from the rotary kiln 7 while conveying the cement clinker in a predetermined conveying direction. As shown in Fig. 2, the cooler apparatus 1 having such functions includes a fixed inclined grate 11 and a plurality of cooling grate lines 12 as main components. The cooler apparatus 1 further includes a damming member 13 and a coupling member 14 as shown in Fig. 3. As shown in Fig. 2, the fixed inclined grate 11 is disposed immediately under the outlet of the rotary kiln 7. The fixed inclined grate 11 is inclined downward in the conveying direction from the outlet side of the rotary kiln 7. Accordingly, the granular cement clinker discharged from the outlet of the rotary kiln 7 falls in the conveying direction in a manner to roll down on the fixed inclined grate 11.

At the forward end of the fixed inclined grate 11 in the conveying direction, the plurality of cooling grate lines (in the present embodiment, three cooling grate lines) 12 are provided. The cement clinker is deposited on the three cooling grate lines 12 and forms a clinker bed 15 (see two-dot chain lines in Fig. 2). The cooling grate lines 12 are structures each extending in the conveying direction, and are arranged side by side adjacently to each other in a lateral direction orthogonal to the conveying direction (hereinafter, the lateral direction is also referred to as "the width direction"). The clinker bed 15 entirely covers the three cooling grate lines 12.

### [Cooling Grate Lines]

The cooler apparatus 1 is a walking floor type cooler apparatus. That is, the cooling grate lines 12 include an unshown truck provided therebelow, and are configured to be movable in a reciprocating manner by means of the truck in the conveying direction and the direction reverse thereto (hereinafter, simply "the reverse direction"). The cooler apparatus 1 repeatedly moves the cooling grate lines 12 in a reciprocating manner as described below, thereby conveying the cement clinker in the conveying direction. Specifically, in the cooler apparatus 1, first, all the cooling grate lines 12 arranged in the width direction are moved forward, and then non-adjacent cooling grate lines 12 are moved rearward a plurality of times separately. By moving the three cooling grate lines 12 in this manner, the cement clinker can be conveyed in the conveying direction. The cement clinker thus conveyed eventually reaches a discharge outlet 12a, which is positioned beyond the forward end of the cooling grate lines 12, and falls downward from the discharge outlet 12a. An unshown crusher is disposed immediately under the discharge outlet 12a, and the cement clinker is crushed by the crusher into finer pieces.

Hereinafter, the configuration of the cooling grate lines 12 is described in further detail. It should be noted that, fundamentally, the three cooling grate lines 12 have the same configuration. Therefore, the configuration of only one of the cooling grate lines 12 is described below, while the description of the other two cooling grate lines 12 is omitted.

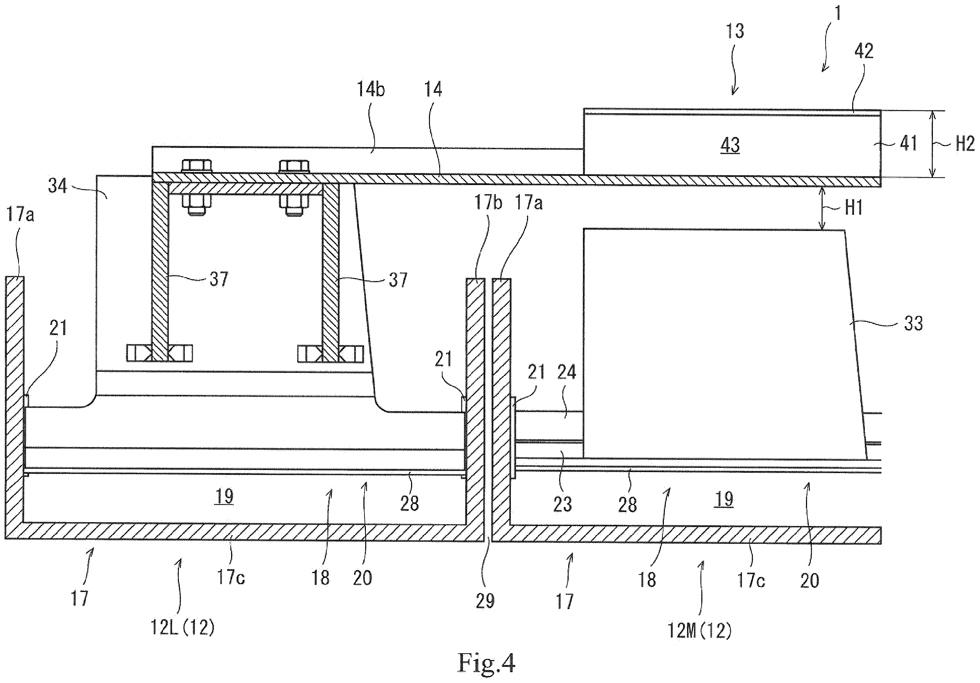

As shown in Fig. 2, each cooling grate line 12 is a strip-shaped structure extending from one end to the other end in the conveying direction. Each cooling grate line 12 includes a plurality of casings 17 and a plurality of coupled grate units 18. For the sake of convenience of the description, Fig. 3 only shows the forwardmost casing 17 of each cooling grate line 12. As shown in Fig. 4, the casing 17 is a roughly rectangular casing with an upper opening, and extends in the conveying direction. Specifically, the casing 17 includes a pair of side walls 17a and 17b. The pair of side walls 17a and 17b extends in the conveying direction, and is disposed such that the side walls 17a and 17b face each other in the width direction. A coupled grate unit 18 is disposed between the pair of side walls 17a and 17b, such that the coupled grate unit 18 fits between the pair of side walls 17a and 17b. When seen in a plan view, the coupled grate unit 18 has a shape that is substantially the same as the shape of the upper opening of the casing 17, and the coupled grate unit 18 fits in the casing 17.

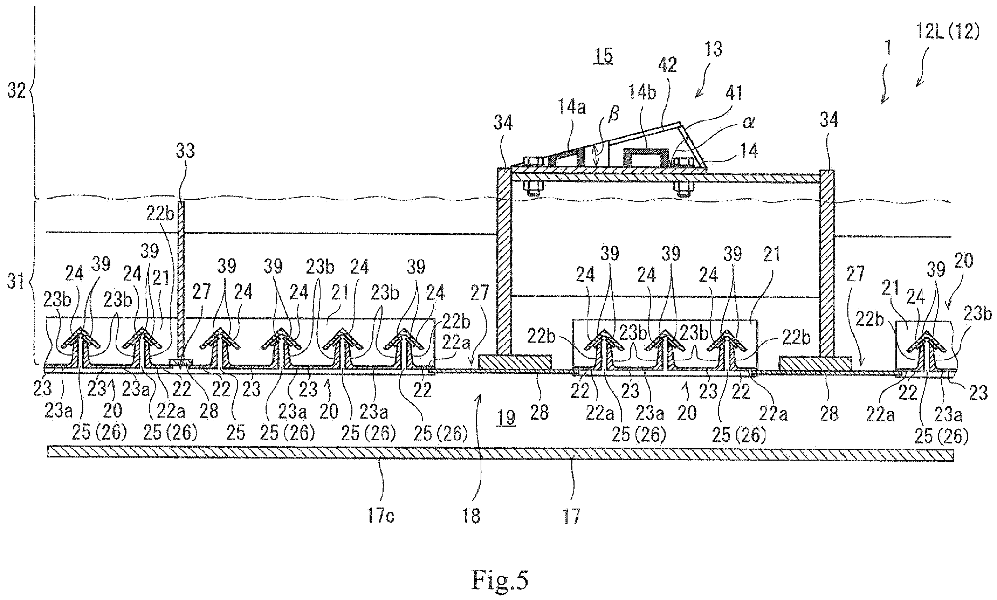

The coupled grate unit 18 disposed in this manner is spaced apart upward from a bottom 17c of the casing 17, and a lower space 19 is formed between the bottom 17c of the casing 17 and the coupled grate unit 18. The lower space 19 is connected to a cooling air supply unit 16 (see Fig. 2), and cooling air is supplied from the cooling air supply unit 16 to the lower space 19. A plurality of cooling passages 26, which will be described below, are formed in the coupled grate unit 18. The cooling air in the lower space 19 is released to the clinker bed 15 through the plurality of cooling passages 26. In this manner, the clinker bed 15 is cooled down. Hereinafter, one example of the configuration of the coupled grate unit 18 is described in further detail with reference to Figs. 4 and 5.

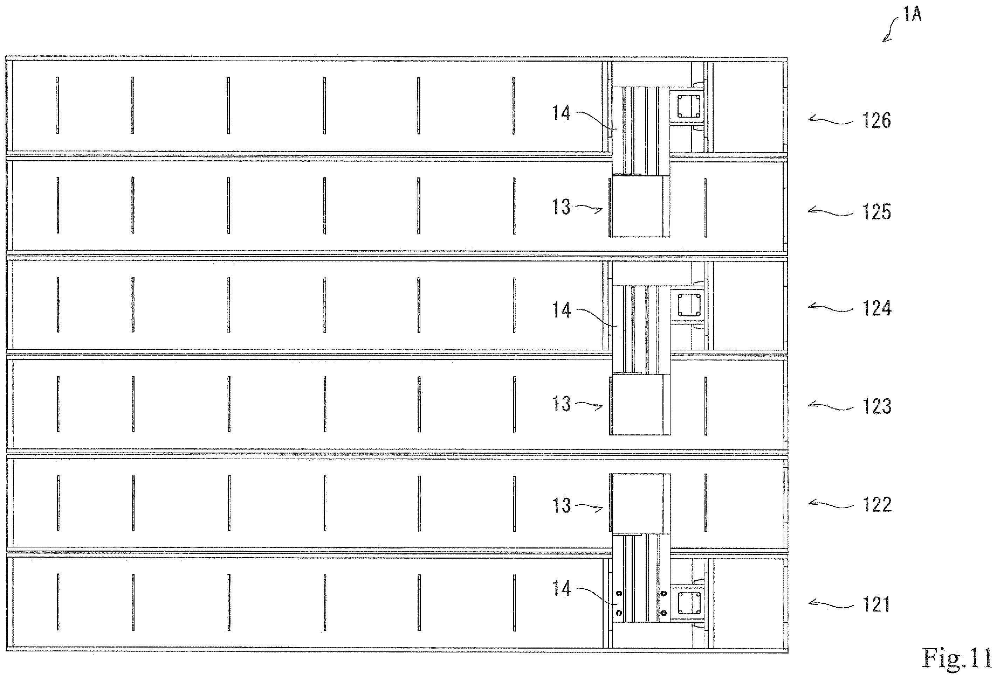

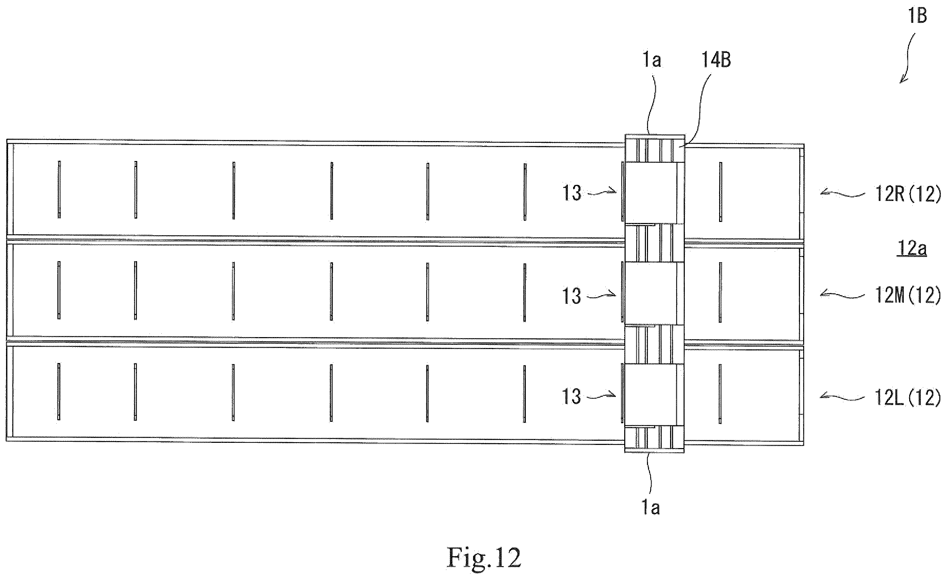

As shown in Fig. 4 and Fig. 5, the coupled grate unit 18 is formed by a plurality of cooling grates 20. In the present embodiment, each of the cooling grates 20 is a chevron-shaped grate including: a pair of attachment plates 21; two end support plates 22; a plurality of middle support plates 23; and a plurality of covering members 24. It should be noted that the details of the configuration of the coupled grate unit 18 are omitted in Fig. 3. The same is true of Figs. 11 and 12, which will be referred to below. The pair of attachment plates 21 extends in the conveying direction, and each attachment plate 21 is strip-shaped when seen in a side view. The attachment plates 21 are arranged such that they face each other and are spaced apart from each other in the width direction. The two end support plates 22 and the plurality of middle support plates 23 extend between the pair of attachment plates 21 in a bridging manner.

Each of the two end support plates 22 is formed by angle steel whose cross section is L shaped when seen in the width direction, and includes a web 22a and a flange 22b. The web 22a and the flange 22b are integrated together such that they are orthogonal to each other, and the flange 22b extends upward. The two end support plates 22 are arranged such that their flanges 22b face each other and are spaced apart from each other in the conveying direction. Between the two end support plates 22 thus arranged, the plurality of middle support plates 23 are arranged.

Each of the plurality of middle support plates 23 is formed by U-steel whose cross section is channel-shaped when seen in the width direction, and includes a web 23a and two flanges 23b. The two flanges 23b are integrated with both ends of the web 23a in the conveying direction, respectively, and extend upward from both the ends of the web 23a. The plurality of middle support plates 23 are arranged side by side in the conveying direction at regular intervals, such that the adjacent flanges 23b face each other. Among the plurality of middle support plates 23, the middle support plate 23 positioned at one end and the middle support plate 23 positioned at the other end in the conveying direction are each disposed so as to be spaced apart from the adjacent end support plate 22 in the conveying direction, such that one of the flanges 23b of each of these middle support plates 23 faces the flange 22b of the adjacent end support plate 22.

The two end support plates 22 and the plurality of middle support plates 23, which are arranged side by side as thus described, are provided with slits 25. The slits 25 are formed such that each slit 25 is formed between the adjacent plates 22 and 23 or between the adjacent plates 23. Each slit 25 extends in the vertical direction, and the lower opening of each slit 25 is connected to the lower space 19. The covering members 24 cover the upper side of the slits 25. Each covering member 24 is an angle steel member whose cross section is roughly inverted V-shaped when seen in the width direction, and each covering member 24 extends in the width direction. Each covering member 24 extends from one attachment plate 21 to the other attachment plate 21, and is placed on top of two adjacent flanges 23b (or on top of two adjacent flanges 22b and 23b) via a plurality of spacers 39. The plurality of spacers 39 are formed to be shorter than the covering members 24, and the spacers 39 are arranged side by side and spaced apart from each other in the width direction. That is, a gap is formed between each adjacent pair of spacers 39, and thus a plurality of gaps are formed between each covering member 24 and its corresponding flanges 23b or its corresponding flanges 22b and 23b. The plurality of gaps and the slits 25 form the cooling passages 26, and as mentioned above, the cooling air in the lower space 19 is supplied to the clinker bed 15 through the cooling passages 26.

The plurality of cooling grates 20 thus configured are arranged in the conveying direction, such that gaps 27 are formed each between the cooling grates 20. Fixed plates 28 are provided, each of which extends in a bridging manner between the webs 22a of the adjacent end support plates 22 so as to cover a corresponding one of the gaps 27. Each fixed plate 28 is roughly strip-shaped when seen in a plan view, and has a length that is substantially the same as the length of each end support plate 22 in the orthogonal direction. Both ends of the fixed plate 28 in the conveying direction are welded to respective ends of the adjacent webs 22a. In this manner, two adjacent cooling grates 20 are coupled together by the fixed plate 28. By thus coupling the plurality of cooling grates 20 together, the coupled grate unit 18 is formed. Both ends of the fixed plate 28 in the width direction are welded to the pair of side walls 17a and 17b of the casing 17, respectively.

In the coupled grate unit 18 thus configured, on each of the right and left sides thereof, a line of attachment plates 21 is formed, which is formed by a plurality of attachment plates 21 coupled together. These lines of attachment plates 21 are welded to the pair of side walls 17a and 17b, respectively. In this way, the coupled grate unit 18 is mounted to the pair of side walls 17a and 17b of the casing 17 so as to extend therebetween in a bridging manner. The plurality of casings 17, each of which is thus configured, are arranged side by side in the conveying direction, and their end portions adjacent to each other are fastened together by bolts or the like. In this manner, each cooling grate line 12 extending from the fixed inclined grate 11 to the discharge outlet 12a is configured.

The three cooling grate lines 12, each of which is configured as described above, are arranged side by side in the width direction as previously mentioned. To be more specific, as shown in Fig. 4, the adjacent cooling grate lines 12 are arranged such that their side walls 17a and 17b face each other in the width direction, and such that a gap 29 is formed between the adjacent side walls 17a and 17b so as to prevent the side walls 17a and 17b from contacting each other. Also, in the cooler apparatus 1, one of the adjacent side walls 17a and 17b is provided with a cover (not shown) so that cement clinker will not get into the gap 29.

In the cooler apparatus 1 thus configured, cement clinker is deposited on the plurality of cooling grate lines 12, and thereby the clinker bed 15 is formed on the plurality of cooling grate lines 12. The clinker bed 15 is formed by two layers that are a dead layer 31 and an active layer 32. The dead layer 31 is a layer formed by low-temperature cement clinker (low-temperature granular buried material) having a lower temperature than the temperature of cement clinker that is the granular conveyed material (hereinafter, "conveyed clinker"). The dead layer 31 is formed as a result of the low-temperature cement clinker being deposited in the cooling grate lines 12 (i.e., deposited on the support plates 22 and 23). The active layer 32 is a layer formed by high-temperature conveyed clinker, and is formed over the dead layer 31 as a result of the high-temperature conveyed clinker being deposited over the dead layer 31. That is, the cooling grate lines 12 (support plates 22 and 23) support the high-temperature conveyed clinker via the dead layer 31, and the cooling grate lines 12 (support plates 22 and 23) are protected from the high-temperature conveyed clinker by the dead layer 31. The cooling grate lines 12 include a plurality of inner partition plates 33 and 34, which are intended for preventing the dead layer 31 in the cooling grate lines 12 from moving.

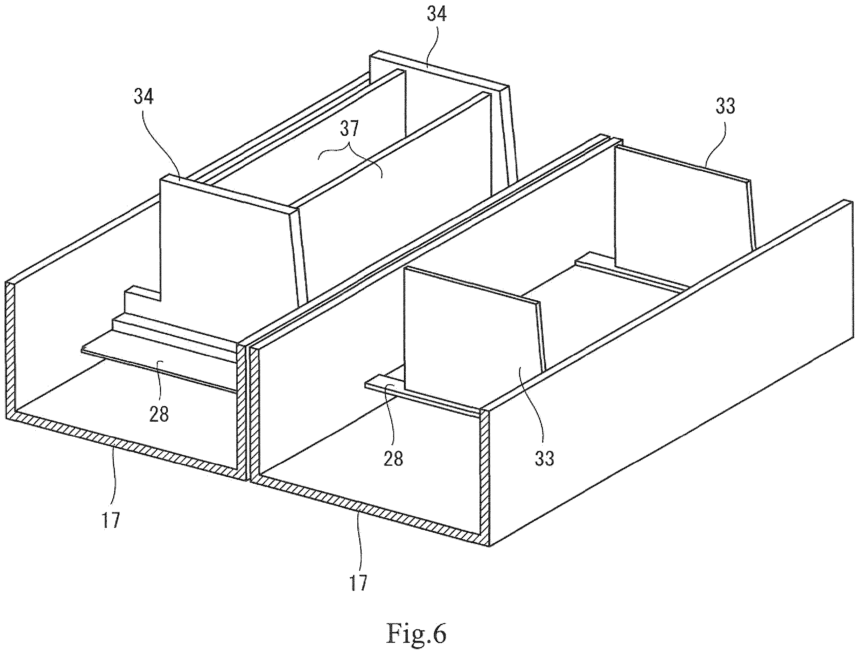

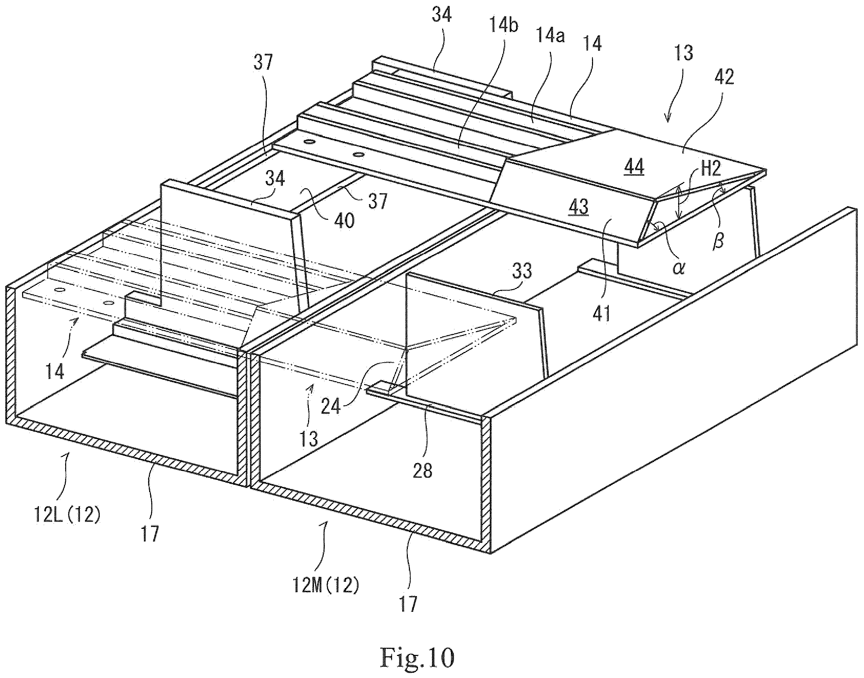

Each of the plurality of inner partition plates 33 and 34 is a plate-shaped member that is roughly trapezoidal when seen in a front view from one side in the conveying direction as shown in Fig. 4. As shown in Fig. 3 and Fig. 5, the plurality of inner partition plates 33 and 34 are arranged in each cooling grate line 12 at a predetermined pitch. To be more specific, as shown in Fig. 5 and Fig. 6, each of the inner partition plates 33 and 34 is provided on its corresponding fixed plate 28 and the pair of side walls 17a and 17b, and extends upward from the fixed plate 28. It should be noted that, in Fig. 6, the chevron-shaped grates (i.e., the support plates 22 and 23, the covering members 24, etc.) are omitted for the sake of convenience of the description. The same is true of Fig. 10, which will be referred to below. The plurality of inner partition plates 33 and 34 are arranged at the pitch that is substantially the same as the length of each cooling grate 20 in the conveying direction. The upper ends of all the plurality of inner partition plates 33, excluding two inner partition plates 34 described below, are positioned evenly at the same height.

The cooler apparatus 1 thus configured further includes a controller 38. It should be noted that the controller 38 includes a CPU (Central Processing Unit), ROM (Read Only Memory), RAM (Random Access Memory), etc. (which are not shown). The ROM stores, for example, a program to be executed by the CPU and various fixed data. The program to be executed by the CPU is, for example, stored in any of various storage media, such as a flexible disc, a CD-ROM, and a memory card, and installed on the ROM from any of these storage media. Data necessary for executing the program is stored in the RAM temporarily.

The controller 38 controls the movement of the unshown truck to cause the three cooling grate lines 12 to move independently of each other in the conveying direction and the reverse direction in a reciprocating manner. By causing the cooling grate lines 12 to move in the reciprocating manner, the controller 38 moves the active layer 32 in the conveying direction, thereby conveying the conveyed clinker forming the active layer 32 to the discharge outlet 12a. In the cooler apparatus 1, while the conveyed clinker is being conveyed, cooling air is supplied from the cooling air supply unit 16 to the lower space 19. Accordingly, while the conveyed clinker is being conveyed toward the discharge outlet 12a, the conveyed clinker can be cooled down by the cooling air. In the description below, operations of the cooler apparatus 1 thus configured are described.

In the cooler apparatus 1, as shown in Fig. 2, the granular conveyed clinker discharged from the rotary kiln 7 is received on the fixed inclined grate 11 and rolls toward the cooling grate lines 12. As a result of the conveyed clinker being continuously discharged from the rotary kiln 7, the conveyed clinker is deposited on the cooling grate lines 12 to form the active layer 32 on the cooling grate lines 12. The cooler apparatus 1 includes the cooling air supply unit 16 (a fan), and cooling air is supplied from the cooling air supply unit 16 to the lower space 19. The cooling air is released from the lower space 19 to the dead layer 31 through the plurality of cooling passages 26, and reaches the active layer 32 through the dead layer 31. The cooling air flows further upward while exchanging heat with the high-temperature conveyed clinker, and eventually the cooling air is released above from the active layer 32. The temperature of the air released above from the active layer 32 is high due to the heat exchange with the conveyed clinker. Part of the released air is discharged from the cooler apparatus 1, and is introduced directly into the kiln 7, or into the precalciner 6 through a discharge pipe 51.

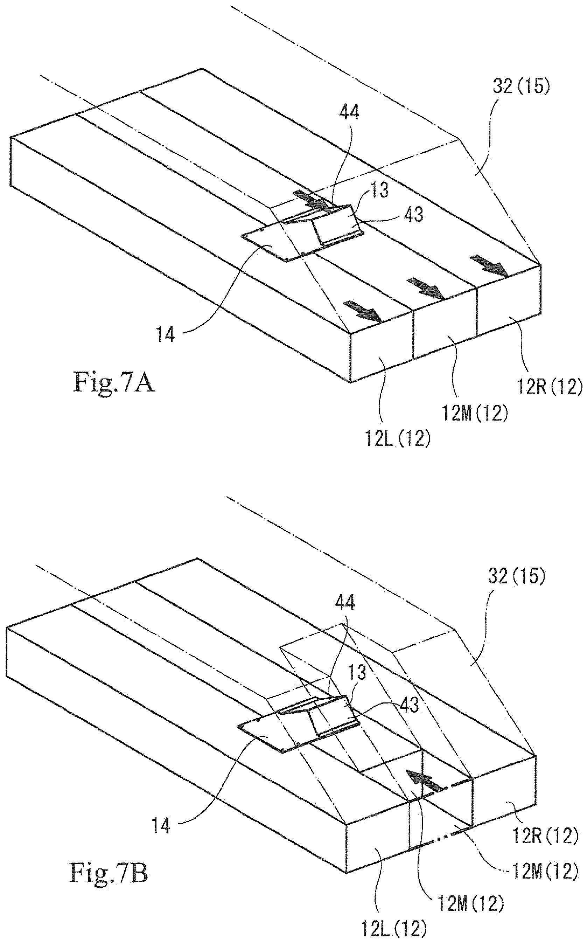

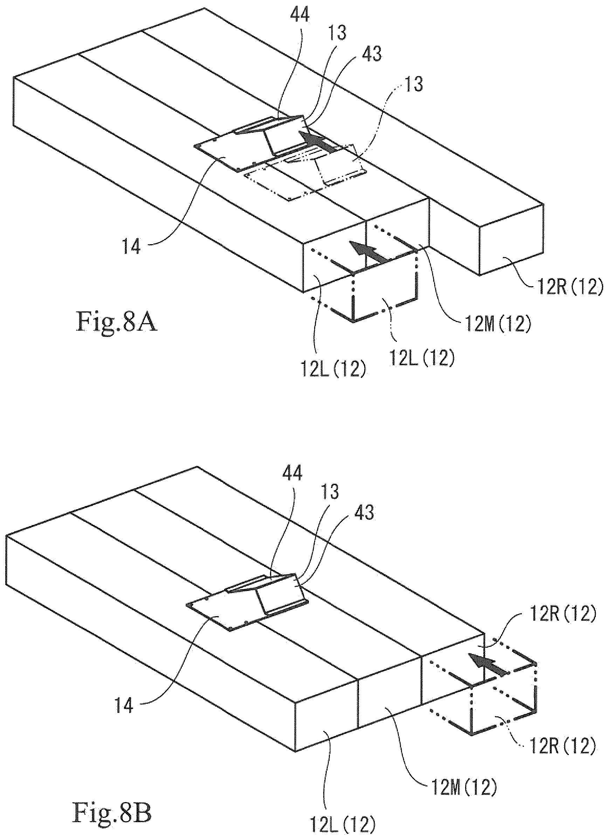

Hereinafter, the steps of conveying the conveyed clinker, which is thus cooled down, are described with reference to Fig. 7 and Fig. 8. That is, in the cooler apparatus 1, the controller 38 first causes all the cooling grate lines 12 to move forward by a predetermined distance (see Fig. 7A). As a result, the active layer 32 moves forward in the conveying direction. Next, the controller 38 causes one of the three cooling grate lines 12 to move rearward by a predetermined distance (see Fig. 7B), and after the one cooling grate line 12 has moved rearward, causes another one of the cooling grate lines 12 to move rearward by a predetermined distance (see Fig. 8A). Finally, the controller 38 causes the remaining one cooling grate line 12 to move rearward (see Fig. 8B). In this manner, the active layer 32 can be moved in the conveying direction relative to the three cooling grate lines 12, and thereafter the three cooling grate lines 12 can be brought back to their initial positions. The controller 38 causes the three cooling grate lines 12 to repeat these movements, and thereby the conveyed clinker is conveyed toward the discharge outlet 12a.

In the cooler apparatus 1, when the three cooling grate lines 12 are moved, frictional resistance occurs between the dead layer 31 and the active layer 32. Therefore, each of the cooling grate lines 12 is moved rearward separately in order to inhibit the active layer 32 from being brought back. However, even though each cooling grate line 12 is moved rearward separately, a certain amount of conveyed clinker is dragged by the cooling grate line 12 moved rearward, and is thereby brought back in the reverse direction. In order to reduce the amount of conveyed clinker thus brought back in the reverse direction, the cooler apparatus 1 includes the damming member 13 as shown in Figs. 3 to 5.

### [Damming Member]

The damming member 13 is disposed corresponding to at least one of the cooling grate lines 12. When the at least one cooling grate line 12 corresponding to the damming member 13 moves rearward in the reverse direction, the conveyed clinker that is brought back in the reverse direction is dammed up by the damming member 13. To be more specific, the cooler apparatus 1 of the present embodiment includes one damming member 13, and the damming member 13 is, as shown in Fig. 3, disposed corresponding to a cooling grate line 12M, which is positioned in the middle among the three cooling grate lines 12. Hereinafter, in some cases, among the three cooling grate lines 12, the cooling grate line positioned in the middle is referred to as the cooling grate line 12M; the cooling grate line positioned on one side in the width direction is referred to as the cooling grate line 12L; and the cooling grate line positioned on the other side in the width direction is referred to as the cooling grate line 12R.

The damming member 13 is disposed at the forward end side of the cooling grate line 12M, i.e., close to the discharge outlet 12a. In the present embodiment, the damming member 13 is disposed such that the position thereof is away from the discharge outlet 12a by a distance X, which is slightly greater than the length of a cooling grate 20 in the conveying direction. Preferably, the distance X is set in relation to the width W of the cooling grate line 12, such that 0.8 ≤ X / W ≤ 1.8. However, the distance X is not limited within such a range, but may be greater than or less than the range. The damming member 13 disposed at such a position is coupled to the cooling grate line 12L via the coupling member 14.

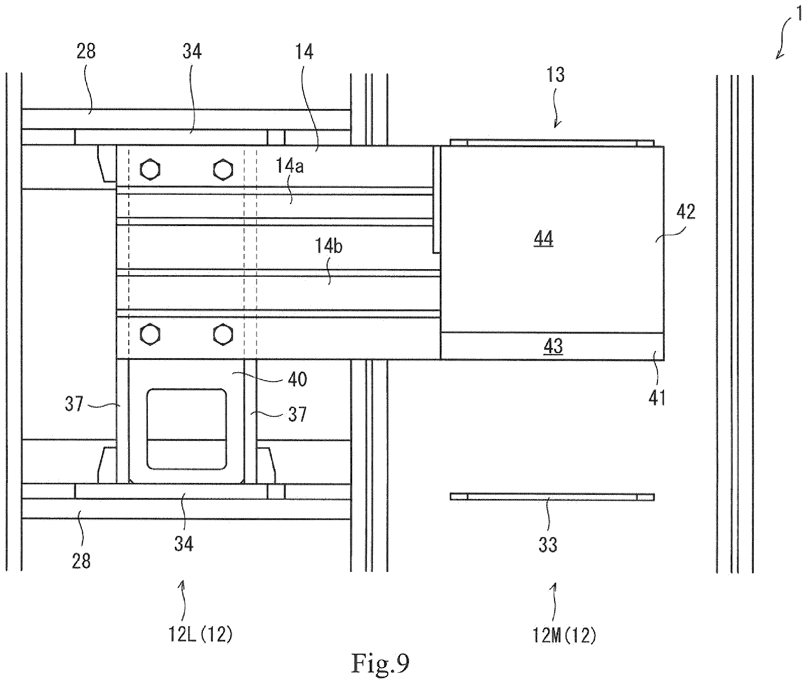

As shown in Fig. 9, the coupling member 14 is a plate-shaped member extending in the width direction and having a rectangular shape when seen in a plan view. The coupling member 14 is provided with the damming member 13 on its one end portion in the width direction, and the other end portion of the coupling member 14 is joined to the cooling grate line 12L. To be more specific, when seen in a plan view, the cooling grate line 12L includes a pair of inner partition plates 34 disposed at positions corresponding to the damming member 13 (in the present embodiment, disposed at positions on one side of the damming member 13 in the width direction). The other end portion of the coupling member 14 is attached via an attachment member 40 to the pair of inner partition plates 34 (more specifically, attached to a pair of reinforcing plates 37, which extends between the pair of inner partition plates 34 in a bridging manner to reinforce the pair of inner partition plates 34). The attachment member 40 is a plate-shaped member extending in the conveying direction and having a rectangular shape when seen in a plan view. The attachment member 40 is attached such that the attachment member 40 is sandwiched between the pair of reinforcing plates 37, and such that the attachment member 40 extends between the pair of reinforcing plates 37 in a bridging manner. The other end portion of the coupling member 14 is placed on the upper surface of the attachment member 40, and is fixed to the upper surface of the attachment member 40 by means of bolts, welding, etc.

In this manner, the coupling member 14 is attached to the pair of inner partition plates 34 via the pair of reinforcing plates 37 and the attachment member 40, and the damming member 13 is provided on the one end portion of the coupling member 14 in the width direction. Accordingly, a load that the damming member 13 receives when the corresponding cooling grate line 12M moves relative to the damming member 13 is transmitted to the pair of inner partition plates 34 via the coupling member 14, the attachment member 40, and the pair of reinforcing plates 37. Therefore, preferably, the pair of inner partition plates 34 is configured to have high rigidity so as to be able to bear the load. For this reason, the pair of inner partition plates 34 is formed such that the thickness thereof is greater than the thickness of the other plurality of inner partition plates 33. The lower end portions of the pair of inner partition plates 34 are long in the width direction, and both ends of each lower end portion in the width direction are welded and fixed to the pair of side walls 17a and 17b of the casing 17, respectively. The pair of inner partition plates 34 is configured in this manner so as to have high strength and so as to be fixed to the cooling grate line 12L with high fixing strength.

As shown in Figs. 4 and 5, the upper ends of the pair of inner partition plates 34 are positioned higher than the upper ends of the other inner partition plates 33. Similarly, the upper ends of the pair of reinforcing plates 37 are positioned higher than the upper ends of the other inner partition plates 33 by a height H1. Accordingly, the lower surface of the coupling member 14 is positioned higher than the upper ends of the plurality of inner partition plates 33 by the height H1. The height H1 is set to be, for example, three times or more (in the present embodiment, five times) as great as the average grain diameter of the conveyed clinker, thereby preventing a situation where the cooling grate lines 12 become unable to move due to the conveyed clinker getting caught between the coupling member 14 and any of the inner partition plates 33. The coupling member 14 further includes two ribs 14a and 14b extending in the width direction, and the coupling member 14 is reinforced by the two ribs 14a and 14b. As previously mentioned, the coupling member 14 thus reinforced is provided with the damming member 13 on its distal end portion.

As described above, the damming member 13 is intended for damming up the conveyed clinker that is brought back in the reverse direction. In the present embodiment, as shown in Fig. 10, the damming member 13 is a plate-shaped member having a triangular shape when seen in a side view (see also Fig. 5). To be more specific, the damming member 13 includes a damming plate 41 and a push-back plate 42. The damming plate 41 is a flat plate extending in the width direction and having a roughly rectangular shape when seen in a front view (see Fig. 4). In the present embodiment, the width of the damming plate 41 is substantially the same as the width of each inner partition plate 33 (see also Fig. 9). At the distal end portion of the coupling member 14, the damming plate 41 having such a shape is fixed to the forward end portion of the coupling member 14 in the conveying direction by welding or the like, such that the damming plate 41 is inclined so as to lean in the reverse direction. The upper end portion of the damming plate 41 is butted against the upper end portion of the push-back plate 42.

The push-back plate 42 is a flat plate extending in the width direction and having a roughly rectangular shape when seen in a rear view in the conveying direction. In the present embodiment, the width of the push-back plate 42 is substantially the same as the width of the damming plate 41 and the width of each inner partition plate 33 (see also Fig. 9). At the distal end portion of the coupling member 14, the push-back plate 42 having such a shape is fixed to the rear end portion of the coupling member 14 in the conveying direction by welding or the like, such that the push-back plate 42 is inclined so as to lean in the conveying direction. The upper end portion of the push-back plate 42 thus disposed is butted against the upper end portion of the damming plate 41 as mentioned above, and these upper end portions are joined together by welding or the like. In this manner, the damming member 13 in a triangular prismatic shape is configured such that, in the conveying direction, the damming plate 41 is disposed at the forward side and the push-back plate 42 is disposed at the rearward side.

The damming member 13 in such a shape includes a damming surface 43 and a push-back surface 44. The damming surface 43 is the main surface of the damming plate 41, and faces in the conveying direction. The push-back surface 44 is the main surface of the push-back plate 42, and faces in the reverse direction. The damming member 13 has a ridge that is formed at a position that is shifted from the center of the coupling member 14 in the conveying direction, and an inclination angle α of the damming plate 41 is greater than an inclination angle β of the push-back plate 42. That is, the inclination angle α of the damming surface 43 is greater than the inclination angle β of the push-back surface 44, and the damming surface 43 is raised to a greater degree than the push-back surface 44. The inclination angle α is an angle formed by the upper surface of the coupling member 14 and the damming surface 43, and is set, for example, within the range of 40° ≤ α ≤ 120°. Also, the inclination angle β is an angle formed by the upper surface of the coupling member 14 and the push-back surface 44, and is set, for example, within the range of 0° < β ≤ 40°. It should be noted that the inclination angles α and β are set in consideration of a height H2 described below, the position where the damming member 13 is disposed, strength, conveyance efficiency, etc.

In the present embodiment, each of the damming surface 43 and the push-back surface 44 is formed by inclining a flat surface. However, these surfaces to be inclined need not be flat surfaces. For example, the damming surface 43 and the push-back surface 44 may be inclined such that, when seen in the width direction, the damming surface 43 and the push-back surface 44 are curved in an arc-like shape. Thus, the way in which each of the damming surface 43 and the push-back surface 44 is inclined need not be linear inclination when seen in the width direction.

When the cooling grate line 12L, which is coupled to the damming member 13 thus configured, moves in the conveying direction, the damming member 13 moves in the conveying direction together with the cooling grate line 12L (two-dot chain lines of Fig. 10 indicate only the movement of the damming member 13), and when the cooling grate line 12L stops, the damming member 13 stops together with the cooling grate line 12L. Since the damming member 13 is disposed such that the damming member 13 is movable relative to the corresponding cooling grate line 12M, the damming member 13 can be kept in a stopped state even when the cooling grate line 12M moves rearward in the reverse direction. Further, when the cooling grate line 12M is in a stopped state, if the cooling grate line 12L moves in the reverse direction, the damming member 13 moves rearward in the reverse direction together with the cooling grate line 12L while moving relative to the cooling grate line 12M.

The damming member 13 configured to move in this manner is buried in the active layer 32 formed on the three cooling grate lines 12 while the conveyed clinker is being conveyed. When the cooling grate line 12M moves rearward in the reverse direction, the conveyed clinker that is brought back in the reverse direction due to the rearward movement of the cooling grate line 12M is dammed up by the damming surface 43. On the other hand, when the cooling grate line 12M is in a stopped state, if the damming member 13 moves in the reverse direction, a slight amount of conveyed clinker is pushed back in the reverse direction by the push-back surface 44. In this respect, the push-back surface 44 is formed in such a manner that, when the damming member 13 is moved relative to the cooling grate line 12M, the conveyed clinker moves onto the push-back surface 44 more easily than onto the damming surface 43. Accordingly, the amount of conveyed clinker pushed back in the reverse direction can be reduced compared to a case where the push-back surface 44 is not formed in such a manner. That is, the push-back surface 44 is formed such that the amount of conveyed clinker moving onto (or moving onto and beyond) the push-back surface 44 is greater than the amount of conveyed clinker moving onto (or moving onto and beyond) the damming surface 43, which dams up the conveyed clinker, i.e., the conveyed clinker moves onto (or moves onto and beyond) the push-back surface 44 more easily than onto (or onto and beyond) the damming surface 43. Thus, the amount of conveyed clinker pushed back by the push-back surface 44 can be reduced while damming up the conveyed clinker brought back in the reverse direction by the damming surface 43. This makes it possible to improve the efficiency in conveying the conveyed clinker in the cooler apparatus 1. Hereinafter, functions that the damming member 13 exert when the conveyed clinker is conveyed are described in further detail with reference to Figs. 7 and 8.

As described above, in the cooler apparatus 1, the controller 38 first causes all the cooling grate lines 12 to move forward by a predetermined distance (see Fig. 7A). Next, the controller 38 causes the middle cooling grate line 12M to move rearward by a predetermined distance (see Fig. 7B). At the time, the conveyed clinker of the active layer 32 deposited on the cooling grate line 12M is dragged by the cooling grate line 12M, and thereby caused to move rearward together with the cooling grate line 12M. In the active layer 32, the damming member 13 is disposed above the cooling grate line 12M. When the cooling grate line 12M moves rearward, the damming member 13 remains stopped together with the cooling grate line 12L. Accordingly, the conveyed clinker of the active layer 32 moving rearward, more specifically, the conveyed clinker positioned in the active layer 32 near the dead layer 31, is dammed up by the damming member 13. This makes it possible to inhibit the conveyed clinker positioned above the damming member 13 from being dragged by the cooling grate line 12M. In other words, the damming member 13 applies resisting force against the active layer 32, which is caused to move rearward, and thereby the conveyed clinker of the active layer 32 can be inhibited from moving rearward in the reverse direction.

The resisting force applied against the active layer 32 can be adjusted depending on the height H2 of the damming member 13. That is, the resisting force applied against the active layer 32 can be increased by increasing the height H2 of the damming member 13, and thereby a large amount of conveyed clinker can be dammed up, which makes it possible to inhibit the active layer 32 from moving rearward. It should be noted that, as shown in Figs. 4 to 10, the height H2 of the damming member 13 is the height from the upper surface of the coupling member 14 to the ridge of the damming member 13. For example, the height H2 is not less than 30 mm and not greater than 180 mm. In the present embodiment, the height H2 is 75 mm, for example.

It should be noted that when the cooling grate line 12M moves rearward in the reverse direction, the conveyed clinker that is dammed up by the upper part of the damming member 13 is pushed in the reverse direction by the conveyed clinker that is positioned in the conveying direction from the dammed-up clinker. Here, depending on the magnitude of pushing force pushing the conveyed clinker in the reverse direction, the pushed conveyed clinker may move upward along the damming surface 43 of the damming member 13, and consequently move beyond the damming surface 43. The pushing force pushing the conveyed clinker in the reverse direction increases/decreases in accordance with, for example, the height of the active layer 32 and the position where the damming member 13 is disposed (i.e., the distance from the discharge outlet 12a to the position of the damming member 13). Therefore, preferably, the height H2 of the damming member 13 is set also in accordance with, for example, the height of the active layer 32 and the position where the damming member 13 is disposed (i.e., the distance from the discharge outlet 12a to the position of the damming member 13). It should be noted that, in the cooler apparatus 1 of the present embodiment, the damming member 13 is disposed close to the discharge outlet 12a in consideration of the magnitude of the pushing force pushing the dammed-up conveyed clinker. In this manner, the amount of conveyed clinker brought back in the reverse direction together with the cooling grate line 12M can be reduced effectively, which makes it possible to improve the efficiency in conveying the conveyed clinker.

Also by increasing the inclination angle α of the damming surface 43, the amount of conveyed clinker moving beyond the damming surface 43 can be reduced. In this manner, similar to the case where the height H2 of the damming member 13 is increased, the resisting force against the active layer 32 can be increased, and thereby the active layer 32 can be inhibited from moving rearward. However, in the case where the inclination angle α of the damming surface 43 is increased, the load on the damming surface 43 in its thickness direction is increased, accordingly. For this reason, it becomes necessary to increase the thickness of the damming plate 41 in order to bear the load. Consequently, the weight of the damming member 13 and the weight of, for example, the coupling member 14 supporting the damming member 13 increase; the manufacturing cost increases; and the conveyance efficiency is lowered. Therefore, in consideration of factors such as the resisting force against the active layer 32 and necessary strength of the damming member 13, it is preferable to set the inclination angle α of the damming surface 43 within the range of 55° ≤ α ≤ 75°. It should be noted that, in the present embodiment, the inclination angle α of the damming surface 43 is set to about 60°. As thus described, the damming member 13 is capable of inhibiting the active layer 32 from moving rearward when the cooling grate line 12M is moved rearward.

After the cooling grate line 12M is brought back to its initial position, the controller 38 causes the cooling grate line 12L to move rearward (see Fig. 8A). When the cooling grate line 12L moves rearward, part of the conveyed clinker on the cooling grate line 12L is dragged by the cooling grate line 12L to move in the reverse direction. Also, when the cooling grate line 12L moves rearward, the damming member 13 moves rearward together with the cooling grate line 12L. The damming member 13 is buried in the active layer 32, and when the damming member 13 moves rearward, the damming member 13 moves in the reverse direction within the active layer 32. In this manner, the damming member 13 moves relative to the active layer 32. The push-back surface 44 of the damming member 13 faces in the reverse direction, and when the damming member 13 moves relative to the active layer 32, the damming member 13 moves in the reverse direction, with the push-back surface 44 being at the head thereof. At the time, the damming member 13 pushes the active layer 32 in the reverse direction by the push-back surface 44, and also, moves within the active layer 32 by pushing through the active layer 32 vertically by the push-back surface 44.

The active layer 32 receives frictional resistance from, for example, the dead layer 31 and the cooling grate lines 12, and basically stays thereon. However, as a result of the damming member 13 pushing the active layer 32, the conveyed clinker on the cooling grate line 12M slightly moves in the reverse direction together with the conveyed clinker on the cooling grate line 12L. The amount of conveyed clinker making such slight movement corresponds to the load that the active layer 32 receives from the push-back surface 44 during the slight movement of the conveyed clinker. Therefore, the amount of conveyed clinker making such slight movement can be reduced by reducing the load. That is, since the load can be reduced by reducing the height of the push-back surface 44, i.e., the height H2 of the damming member 13, it is preferable to set the height H2 of the damming member 13 to a small value.

However, as previously described, when the cooling grate line 12M is moved rearward, it is preferable that the height H2 of the damming member 13 be great so that the resisting force against the active layer 32 will be great. That is, the height H2 of the damming member 13 is set in consideration of a tradeoff between the amount of conveyed clinker dammed up by the damming member 13 when the cooling grate line 12M moves rearward and the amount of conveyed clinker pushed back in the reverse direction by the damming member 13 when the cooling grate line 12L moves rearward. Thus, the height H2 of the damming member 13 is set such that the amount of conveyed clinker dammed up by the damming member 13 will be greater than the amount of conveyed clinker pushed back in the reverse direction by the damming member 13. With such setting of the height H2, the efficiency in conveying the conveyed clinker can be improved.

By setting the inclination angle β of the push-back surface 44 to be small, the pushing force pushing the active layer 32 can be made small, which allows the conveyed clinker to easily move onto and beyond the push-back surface 44. In this manner, similar to the case where the height H2 of the damming member 13 is set to be small, the amount of conveyed clinker pushed back in the reverse direction can be made small. In particular, by setting the inclination angle β of the push-back surface 44 to be less than the inclination angle α of the damming surface 43, the amount of conveyed clinker dammed up by the damming member 13 when the cooling grate line 12M moves rearward can be made greater than the amount of conveyed clinker pushed back in the reverse direction by the damming member 13 when the cooling grate line 12L moves rearward, and thereby the conveyance efficiency can be improved.

It should be noted that when the inclination angle β of the push-back surface 44 is reduced, the length of the push-back surface 44 in the reverse direction is increased, accordingly. Consequently, the weight of the damming member 13 and the weight of, for example, the coupling member 14 supporting the damming member 13 increase; the manufacturing cost increases; and the conveyance efficiency is lowered. Therefore, in consideration of factors such as the manufacturing cost and conveyance efficiency, it is preferable to set the inclination angle β of the push-back surface 44 within the range of 10° ≤ β ≤ 30°. It should be noted that, in the present embodiment, the inclination angle β of the push-back surface 44 is set to about 15°. As thus described, the damming member 13 is designed such that the amount of conveyed clinker pushed back in the reverse direction when the cooling grate line 12L is moved rearward can be reduced, and thereby lowering of conveyance efficiency is suppressed.

After the cooling grate line 12L is thus moved rearward and brought back to its initial position, the cooling grate line 12R is moved rearward to its initial position (see Fig. 8B). After all the three cooling grate lines 12 are brought back to their initial values, the three cooling grate lines 12 are moved forward again, and then the three cooling grate lines 12 are moved rearward one by one sequentially, starting from the cooling grate line 12M. By repeating these operations, the conveyed clinker can be conveyed to the discharge outlet 12a and discharged from the discharge outlet 12a.

### [Other Functions, etc. of Cooler Apparatus]

In the cooler apparatus 1 of the present embodiment, the cooling grate line 12L and the damming member 13 are coupled together by the coupling member 14, and the damming member 13 can be moved in a reciprocating manner together with the cooling grate line 12L. Accordingly, no drive device for moving the damming member 13 is required, which makes it possible to reduce the number of components. Moreover, when the cooling grate line 12M and the cooling grate line 12L are moved together in the conveying direction, the damming member 13 can also be moved together with the cooling grate line 12M and the cooling grate line 12L. That is, the damming member 13 can be moved in the conveying direction together with the conveyed clinker, and this makes it possible to prevent a situation where the operation of conveying the conveyed clinker is hindered. Thus, lowering of conveyance efficiency due to the installation of the damming member 13 can be suppressed.

In the cooler apparatus 1 of the present embodiment, the attachment member 40 is provided on the pair of adjacent inner partition plates 34 via the pair of reinforcing plates 37, and in addition, the coupling member 14 is attached to the attachment member 40. Since the coupling member 14 can be thus attached to the inner partition plates 34, increase in the number of components can be suppressed.

In the cooler apparatus 1 of the present embodiment, the damming member 13 is provided above only the middle cooling grate line 12M, and no damming member 13 is provided above the cooling grate lines 12L and 12R, which are arranged at both sides of the cooler apparatus 1 in the width direction. By disposing the damming member 13 in this manner, the amount of conveyed clinker that is brought back when each of the cooling grate lines 12L and 12R is brought back to its initial position can be made greater than the amount of conveyed clinker that is brought back when the cooling grate line 12M is brought back to its initial position. In this manner, the deposition amount of conveyed clinker in the vicinity of both sides of the cooler apparatus 1 in the width direction can be made greater than the deposition amount of conveyed clinker in the vicinity of the center of the cooler apparatus 1 in the width direction. That is, in the active layer 32, a greater amount of conveyed clinker can be deposited on both sides of the cooler apparatus 1 in the width direction, and thereby the height of the active layer 32 can be made greater at both sides of the cooler apparatus 1 in the width direction.

### <Other Embodiments>

The cooler apparatus 1 of the present embodiment is configured by arranging the three cooling grate lines 12 side by side. However, as an alternative, the cooler apparatus 1 may be configured by arranging more than three cooling grate lines side by side. For example, as shown in Fig. 11, a cooler apparatus 1A may be configured by arranging six cooling grate lines 121 to 126 side by side. It should be noted that the cooling grate lines 121 to 126 are configured in the same manner as the cooling grate lines 12 of the cooler apparatus 1 of the present embodiment. Therefore, the reference signs of the components of the cooling grate lines 121 to 126 are omitted in Fig. 11. The cooler apparatus 1A includes three damming members 13. Two of the damming members 13 are attached to the cooling grate lines 121 and 126, respectively, via the coupling members 14. Among the cooling grate lines 121 to 126, the cooling grate line 121 is positioned nearest to one side of the cooler apparatus 1A in the width direction, and the cooling grate line 126 is positioned nearest to the other side of the cooler apparatus 1A in the width direction. The remaining one damming member 13 is attached to the cooling grate line 124 via the coupling member 14. The cooling grate line 124 is positioned at the other side of the central part of the cooler apparatus 1A in the width direction. Thus, also in the cooler apparatus 1A, no damming member 13 is disposed above the cooling grate lines 121 and 126, which are positioned nearest to the one side and the other side of the cooler apparatus 1A in the width direction, respectively, and thereby the conveyed clinker of the active layer is deposited also in the vicinity of both sides of the cooler apparatus 1A in the width direction.

In the cooler apparatus 1 of the present embodiment, the damming member 13 is attached to the cooling grate line 12 via the coupling member 14. However, it is not essential that the damming member 13 be attached to the cooling grate line 12. For example, the configuration of a cooler apparatus 1B as shown in Fig. 12 may be adopted. Specifically, the cooler apparatus 1B includes side walls 1a. One side wall 1a and the other side wall 1a are positioned outside the plurality of cooling grate lines 12 at one side and the other side of the plurality of cooling grate lines 12 in the width direction, respectively. A coupling member 14B is disposed such that the coupling member 14B extends between the side walls 1a in a bridging manner. A plurality of damming members 13 are provided on the upper surface of the coupling member 14B, such that the plurality of damming members 13 are positioned above the plurality of cooling grate lines 12, respectively. By thus disposing the coupling member 14B such that the coupling member 14B extends between the side walls 1a in a bridging manner, the damming members 13 can be arranged above all the plurality of cooling grate lines 12, respectively, which makes it possible to further improve the conveyance efficiency.

The cooler apparatus 1 of the present embodiment adopts the damming member 13 extending in the width direction and having a triangular prismatic shape. However, the shape and structure of the damming member 13 are not thus limited. For example, the damming member 13 may be configured to be extendable/retractable or foldable in the vertical direction. The damming member 13 may be configured to extend upward when the corresponding cooling grate line 12M moves in the reverse direction, and retract downward when the cooling grate line 12L coupled to the damming member 13 moves in the reverse direction. Alternatively, the damming member may be configured as a movable flap that may be raised upward when the corresponding cooling grate line 12M moves in the reverse direction, and may be lowered downward when the cooling grate line 12L coupled to the damming member 13 moves in the reverse direction. Further alternatively, the damming member may be configured as a gear or the like that may be rotatably provided on the coupling member 14 via a one-way clutch. In this case, when the corresponding cooling grate line 12M moves in the reverse direction, the damming member does not rotate, but applies resisting force against the active layer 32, whereas when the cooling grate line 12L coupled to the damming member 13 moves in the reverse direction, the damming member rotates in accordance with the movement of the active layer 32 without applying resisting force against the active layer 32.

The cooler apparatus 1 of the present embodiment adopts chevron-shaped grates as the cooling grates 20. However, the cooling grates 20 are not necessarily limited to chevron-shaped grates. Known cooling grates in various shapes are adoptable, and the shape of the cooling grates to be adopted is not limited to the shape of the above-described chevron-shaped grates.

From the foregoing description, numerous modifications and other embodiments of the present invention are obvious to a person skilled in the art. Therefore, the foregoing description should be interpreted only as an example and is provided for the purpose of teaching the best mode for carrying out the present invention to a person skilled in the art. The structural and/or functional details may be substantially altered without departing from the spirit of the present invention.

### Reference Signs List

- H1: height
- 1, 1A, 1B: cooler apparatus
- 12: cooling grate line
- 12L: cooling grate line (different cooling grate line)
- 12M: cooling grate line (at least one cooling grate line)
- 12a: discharge outlet
- 13: damming member
- 14, 14B: coupling member
- 31: dead layer
- 32: active layer
- 34: inner partition plate
- 38: controller
- 40: attachment member
- 43: damming surface
- 44: push-back surface
- 121, 124, 126: cooling grate line (different cooling grate line)
- 122, 123, 125: cooling grate line (at least one cooling grate line)

## Claims

1. A cooler apparatus for cooling, by using cooling air, a high-temperature granular conveyed material that is deposited to form a layer (32) while conveying the granular conveyed material in a conveying direction, the cooler apparatus comprising:
a plurality of cooling grate lines (12) that are arranged adjacently to each other in a width direction orthogonal to the conveying direction, the plurality of cooling grate lines (12) supporting the granular conveyed material via a dead layer (31) formed by a granular buried material having a lower temperature than a temperature of the granular conveyed material, and to move in a reciprocating manner in the conveying direction and a reverse direction thereto to convey the granular conveyed material; and
a damming member (13) disposed above at least one (12M) of the plurality of cooling grate lines (12) and buried in the layer of the granular conveyed material (32),
**characterized in that**
the damming member (13) is configured to move in the conveying direction and the reverse direction relative to the at least one cooling grate line (12M) when the at least one cooling grate line (12M) moves in the reciprocating manner, and
the damming member (13) is configured such that the granular conveyed material moves onto and beyond the damming member (13) more easily when the at least one cooling grate line (12M) moves in the conveying direction relative to the damming member (13) than when the at least one cooling grate line (12M) moves in the reverse direction relative to the damming member (13).

2. The cooler apparatus according to claim 1, wherein
the damming member (13) includes a damming surface (43) facing in the conveying direction, the damming surface (43) being configured to dam up the granular conveyed material, and
the damming surface (43) is inclined upward in the reverse direction.

3. The cooler apparatus according to claim 2, wherein
the damming member (13) includes a push-back surface (44) facing in the reverse direction, the push-back surface (44) being formed such that the granular conveyed material moves onto the push-back surface (44),
the push-back surface (44) is inclined upward in the conveying direction, and
an angle (β) of the push-back surface (44) is less than an angle (α) of the damming surface (43).

4. The cooler apparatus according to any one of claims 1 to 3, comprising a coupling member (14, 14B) configured to couple the damming member (13) and a different one (12L) of the cooling grate lines (12) different from the at least one cooling grate line (12M).

5. The cooler apparatus according to claim 4, wherein
the different cooling grate line (12L) includes a plurality of inner partition plates (33, 34) that are arranged and spaced apart from each other in the conveying direction, the plurality of inner partition plates (33, 34) being configured to inhibit movement of the dead layer, and
the coupling member (14, 14B) is provided on the plurality of inner partition plates (33, 34) via an attachment member (40).

6. The cooler apparatus according to any one of claims 1 to 5, comprising a controller (38) configured to control movement of the plurality of cooling grate lines (12) to cause the plurality of cooling grate lines (12) to move in the reciprocating manner, wherein
the controller (38) is configured to:
cause all the plurality of cooling grate lines (12) to move in the conveying direction; then
cause the at least one cooling grate line (12M) to move in the reverse direction; and thereafter
cause the different cooling grate line (12L) to move in the reverse direction.

7. The cooler apparatus according to any one of claims 1 to 6, wherein
the damming member (13) is disposed above and spaced apart from the at least one cooling grate line (12M), such that a gap is formed between the damming member (13) and the at least one cooling grate line (12M).

8. The cooler apparatus according to any one of claims 1 to 7, wherein
the plurality of cooling grate lines (12) convey the granular conveyed material to a discharge outlet by moving in the reciprocating manner, and
the damming member (13) is disposed at a position that is closer to the discharge outlet than to a center of the cooling grate lines (12).

9. The cooler apparatus according to any one of claims 1 to 8, wherein
the different cooling grate line (12L) is positioned at both sides of the at least one cooling grate line (12M) in the width direction.

## Patentansprüche

1. Kühlvorrichtung zum Kühlen eines hochtemperierten körnigen Fördermaterials unter Verwendung von Kühlluft, welches Fördermaterial zur Bildung einer Schicht (32) abgelagert wird, während das körnige Fördermaterial in einer Förderrichtung befördert wird, wobei die Kühlvorrichtung Folgendes umfasst:
eine Vielzahl von Kühlgitterlinien (12), die in einer Breitenrichtung orthogonal zur Förderrichtung nebeneinander ausgerichtet sind, wobei die Vielzahl von Kühlgitterlinien (12) das körnige Fördermaterial über eine tote Schicht (31) stützen, die durch ein körniges, eingebettetes Material gebildet wird, das eine niedrigere Temperatur als eine Temperatur des körnigen Fördermaterials aufweist, und sich in der Förderrichtung und in umgekehrter Richtung dazu hin und her bewegen, um das körnige Fördermaterial zu fördern; und
ein Stauelement (13), das über zumindest einer (12M) aus der Vielzahl von Kühlgitterlinien (12) angeordnet und in der Schicht des körnigen Fördermaterials (32) eingebettet ist,
**dadurch gekennzeichnet, dass**
das Stauelement (13) so konfiguriert ist, dass es sich in der Förderrichtung und in der umgekehrten Richtung relativ zu der zumindest einen Kühlgitterlinie (12M) bewegt, wenn sich die zumindest eine Kühlgitterlinie (12M) hin und her bewegt, und
das Stauelement (13) so konfiguriert ist, dass sich das körnige Fördermaterial leichter auf und über das Stauelement (13) bewegt, wenn sich die zumindest eine Kühlgitterlinie (12M) in der Förderrichtung relativ zu dem Stauelement (13) bewegt, als wenn sich die zumindest eine Kühlgitterlinie (12M) in der umgekehrten Richtung relativ zu dem Stauelement (13) bewegt.

2. Kühlvorrichtung nach Anspruch 1, wobei
das Stauelement (13) eine Staufläche (43) aufweist, die in die Förderrichtung weist, wobei die Staufläche (43) so konfiguriert ist, dass sie das körnige Fördermaterial staut, und
die Staufläche (43) in der umgekehrten Richtung nach oben geneigt ist.

3. Kühlvorrichtung nach Anspruch 2, wobei
das Stauelement (13) eine Rückstoßfläche (44) aufweist, die in die umgekehrte Richtung weist, wobei die Rückstoßfläche (44) so ausgebildet ist, dass sich das körnige Fördermaterial auf die Rückstoßfläche (44) bewegt,
die Rückstoßfläche (44) in Förderrichtung nach oben geneigt ist, und
ein Winkel (β) der Rückstoßfläche (44) kleiner ist als ein Winkel (α) der Staufläche (43).

4. Kühlvorrichtung nach einem der Ansprüche 1 bis 3, umfassend ein Kopplungselement (14, 14B), das so konfiguriert ist, dass es das Stauelement (13) und eine andere (12L) der Kühlgitterlinien, die sich von der zumindest einen Kühlgitterlinie (12M) unterscheidet, koppelt.

5. Kühlvorrichtung nach Anspruch 4, wobei
die andere Kühlgitterlinie (12L) eine Vielzahl von inneren Trennplatten (33, 34) aufweist, die in der Förderrichtung ausgerichtet und voneinander beabstandet sind, wobei die Vielzahl von inneren Trennplatten (33, 34) so konfiguriert ist, dass sie die Bewegung der toten Schicht verhindern, und
das Kopplungselement (14, 14B) über ein Befestigungselement (40) an der Vielzahl von inneren Trennplatten (33, 34) vorgesehen ist.

6. Kühlvorrichtung nach einem der Ansprüche 1 bis 5, umfassend eine Steuerung (38), die so konfiguriert ist, dass sie die Bewegung der Vielzahl von Kühlgitterlinien (12) steuert, um zu bewirken, dass sich die Vielzahl von Kühlgitterlinien (12) hin- und herbewegt,
wobei
die Steuerung (38) zu Folgendem konfiguriert ist:
Bewirken, dass sich alle aus der Vielzahl von Kühlgitterlinien (12) in der Förderrichtung bewegen; dann
Bewirken, dass sich die zumindest eine Kühlgitterlinie (12M) in der umgekehrten Richtung bewegt; und danach
Bewirken, dass sich die andere Kühlgitterlinie (12L) in die umgekehrte Richtung bewegt.

7. Kühlvorrichtung nach einem der Ansprüche 1 bis 6, wobei
das Stauelement (13) über der zumindest einen Kühlgitterlinie (12M) angeordnet und von dieser beabstandet ist, so dass zwischen dem Stauelement (13) und der zumindest einen Kühlgitterlinie (12M) ein Spalt gebildet wird.

8. Kühlvorrichtung nach einem der Ansprüche 1 bis 7, wobei
die Vielzahl von Kühlgitterlinien (12) das körnige Fördermaterial durch eine Hin- und Herbewegung zu einer Auslassöffnung befördern, und
das Stauelement (13) an einer Stelle angeordnet ist, die näher an der Auslassöffnung als an einer Mitte der Kühlgitterlinien (12) liegt.

9. Kühlvorrichtung nach einem der Ansprüche 1 bis 8, wobei
die andere Kühlgitterlinie (12L) an beiden Seiten der zumindest einen Kühlgitterlinie (12M) in Breitenrichtung angeordnet ist.

## Revendications

1. Dispositif de refroidissement permettant de refroidir, au moyen d'air de refroidissement, un matériau granulaire transporté à haute température qui est déposé pour former une couche (32) pendant ledit transport du matériau granulaire transporté dans un sens de transport, le dispositif de refroidissement comprenant :
une pluralité de lignes de grilles de refroidissement (12) qui sont agencées adjacentes les unes aux autres dans un sens de la largeur qui est orthogonal au sens de transport, la pluralité de lignes de grilles de refroidissement (12) supportant le matériau granulaire transporté par le biais d'une couche dite morte (31) formée par un matériau granulaire enfoui ayant une température inférieure à celle du matériau granulaire transporté, et se déplaçant en va-et-vient dans le sens de transport et dans un sens inverse à celui-ci pour transporter le matériau granulaire transporté, et
un élément de barrage (13) disposé au-dessus d'au moins une ligne (12M) de la pluralité de lignes de grilles de refroidissement (12) et enfoui dans la couche de matériau granulaire transporté (32),
**caractérisé en ce que**
l'élément de barrage (13) est conçu pour se déplacer dans le sens de transport et dans le sens inverse par rapport à l'au moins une ligne de grilles de refroidissement (12M) lorsque l'au moins une ligne de grilles de refroidissement (12M) se déplace en va-et-vient, et
l'élément de barrage (13) est conçu de façon que le matériau granulaire transporté se déplace sur l'élément de barrage (13) et au-delà de celui-ci plus facilement lorsque l'au moins une ligne de grilles de refroidissement (12M) se déplace dans le sens de transport par rapport à l'élément de barrage (13) que lorsque l'au moins une ligne de grilles de refroidissement (12M) se déplace dans le sens inverse par rapport à l'élément de barrage (13).

2. Dispositif de refroidissement selon la revendication 1, dans lequel
l'élément de barrage (13) comporte une surface de barrage (43) orientée dans le sens de transport, la surface de barrage (43) étant conçue pour endiguer le matériau granulaire transporté, et
la surface de barrage (43) est inclinée vers le haut dans le sens inverse.

3. Dispositif de refroidissement selon la revendication 2, dans lequel
l'élément de barrage (13) comprend une surface de refoulement (44) orientée dans le sens inverse, la surface de refoulement (44) étant formée de façon que le matériau granulaire transporté se déplace sur la surface de refoulement (44),
la surface de refoulement (44) étant inclinée vers le haut dans le sens de transport, et
un angle (β) de la surface de refoulement (44) est inférieur à un angle (α) de la surface de barrage (43).

4. Dispositif de refroidissement selon l'une quelconque des revendications 1 à 3, comprenant un élément de couplage (14, 14B) conçu pour coupler l'élément de barrage (13) et une autre (12L) des lignes de grilles de refroidissement (12) différente de l'au moins une ligne de grilles de refroidissement (12M).

5. Dispositif de refroidissement selon la revendication 4, dans lequel
la ligne de grilles de refroidissement différente (12L) comporte une pluralité de plaques de séparation intérieures (33, 34) qui sont agencées dans le sens de transport en étant espacées les unes des autres, la pluralité de plaques de séparation intérieures (33, 34) étant conçues pour empêcher le mouvement de la couche morte, et
l'élément de couplage (14, 14B) est prévu sur la pluralité de plaques de séparation intérieures (33, 34) au moyen d'un élément de fixation (40).

6. Dispositif de refroidissement selon l'une quelconque des revendications 1 à 5, comprenant un organe de commande (38) conçu pour commander le mouvement de la pluralité de lignes de grilles de refroidissement (12) pour amener la pluralité de lignes de grilles de refroidissement (12) à se déplacer en va-et-vient,
l'organe de commande (38) étant conçu pour :
amener la totalité de la pluralité de lignes de grilles de refroidissement (12) à se déplacer dans le sens de transport, puis
amener l'au moins une ligne de grilles de refroidissement (12M) à se déplacer dans le sens inverse, et ensuite
amener la ligne de grilles de refroidissement différente (12L) à se déplacer dans le sens inverse.

7. Dispositif de refroidissement selon l'une quelconque des revendications 1 à 6, dans lequel l'élément de barrage (13) est disposé au-dessus de l'au moins une ligne de grilles de refroidissement (12M) en en étant espacé, de façon qu'un espace est formé entre l'élément de barrage (13) et l'au moins une ligne de grilles de refroidissement (12M).

8. Dispositif de refroidissement selon l'une quelconque des revendications 1 à 7, dans lequel
la pluralité de lignes de grilles de refroidissement (12) transportent le matériau granulaire transporté vers une sortie d'évacuation en se déplaçant en va-et-vient, et
l'élément de barrage (13) est disposé en une position qui est plus proche de la sortie d'évacuation que du centre des lignes de grilles de refroidissement (12).

9. Dispositif de refroidissement selon l'une quelconque des revendications 1 à 8, dans lequel
la ligne de grilles de refroidissement différente (12L) est positionnée des deux côtés de l'au moins une ligne de grilles de refroidissement (12M) dans le sens de la largeur.
